# EUROPEAN PATENT APPLICATION

(11) **EP 0 875 785 A2**
(43) Date of publication of application: **04.11.1998**
(21) Application number: 98301917.5
(22) Date of filing: 13.03.1998
(51) Int. Cl.: G03B 37/00

(54) **Image display apparatus**

(30) Priority: 11.04.1997 GB 9707425
(71) Applicant: Seos Displays Limited, Burgess Hill, West Sussex RH15 8QY (GB)
(72) Inventor: MacPherson, Ian Murdoch, Burgess Hill, West Sussex, RH15 0TN (GB)
(74) Representative: Jones, Graham H.

(57) **Abstract**

Image display apparatus (2) comprising a target projector (4) and self-calibration means (6) comprising reference means (8) for giving a known angular reference, and visual sensor means (10) which is positioned in an optical path of the target projector (4) and which has an optical path (12) to the reference means (8). The target projector (4) is able to steer to a predetermined azimuth/elevation and is also able to access the reference means (8) using a homing algorithm and the visual sensor means (10) in order to effect self-calibration.

## Description

This invention relates to image display apparatus and, more especially, this invention relates to image display apparatus having a target projector.

Image display apparatus having a target projector is known. When the image display apparatus is used, the target projector has a certain positional specification placed on it. This positional specification is usually a positional specification in terms of an angular deviation from a reference point on a dome surface of a dome. The angular deviation is usually considered when the target projector is both static and under motion.

The fundamental design of the target projector is such that its positional accuracy will be close to the positional specification placed on it. However, there are certain factors which affect the positional accuracy of the target projector and which are outside the capability of the target projector easily to correct. These factors include the absolute position of the target projector within the dome, and the dome radius accuracy. The known general solution to this problem is to inform the target projector where the errors are within the dome, by aligning a demanded angular position with a known angular reference, and measuring the error. The solution is currently effected by a positional calibration procedure which requires an operator to position a laser theodolite spot at a specific azimuth/ elevation within the dome. The operator then asks the target projector to steer a centralised spot or cross-hair to the same azimuth/elevation. Due to the above mentioned inaccuracies, the target projector spot and the laser theodolite spot may not coincide. If this happens, the operator then manually steers the target projector spot onto the laser theodolite spot using left/right and up/down commands through a user interface. The error is stored in a file for later use in a distortion algorithm. This manual calibration may take several minutes to do and it represents a time wasting chore.

It is an aim of the present invention to obviate or reduce the above mentioned problem.

Accordingly, in one non-limiting embodiment of the present invention there is provided image display apparatus comprising a target projector and self-calibration means, the self-calibration means comprising reference means for giving a known angular reference, and visual sensor means which is positioned in an optical path of the target projector and which has an optical path to the reference means, and the image display apparatus being such that the target projector is able to steer to a predetermined azimuth/elevation and is also able to access the reference means using a homing algorithm and the visual sensor means, whereby the achieved predetermined azimuth/elevation is able to be compared with the reference means in order to determine any positional error and to calibrate for the positional error.

The image display apparatus of the present invention is thus able to calibrate itself and an operator is not required to be present for the positional calibration.

The image display apparatus of the present invention may form part of simulator apparatus, for example flight, vehicle, marine and leisure simulator apparatus.

The image display apparatus may be one in which the target projector is so connected to the reference means that the target projector is able to switch on the reference means.

In a first embodiment of the invention, the image display apparatus may include a 50:50 beam splitter for the visual sensor means.

In a second embodiment of the invention, the image display apparatus may include a polarising beam splitter for the visual sensor means.

In a third embodiment of the invention, the image display apparatus may include motor means for effecting the motorised insertion of the visual sensor means in the optical path of the target projector. There may be only one of the visual sensor means in this embodiment of the invention. Alternatively, there may be two of the visual sensor means, with the two visual sensor means being arranged back to back with one visual sensor means being directed to the target projector and the other visual sensor means being directed to the reference means.

In a fourth embodiment of the invention, the image display apparatus includes a mirror and motor means for effecting the motorised insertion of the mirror in the optical path of the target projector. In this embodiment of the invention, the mirror may be a single mirror. Alternatively, the mirror may be a double mirrored mirror, the double mirrored mirror being such that one side reflects a full image from the target projector onto one visual sensor means, and such that the other side reflects a full reference image onto another visual sensor means.

The image display apparatus may be one in which the visual sensor means is a position sensing device, a charge coupled device, or a quadrant detector.

Preferably, the reference means is at least one light emitting diode. Usually there will be a plurality of the light emitting diodes. The reference means is preferably provided on the surface of a dome forming part of the image display apparatus. If desired, the reference means can be a theodolite spot obtained from a theodolite. Preferably the theodolite spot will be a laser theodolite spot obtained from a laser theodolite. Other types of reference means may be employed if desired.

Preferably, the target projector is a liquid crystal display target projector. Other types of target projector may however be employed.

An embodiment of the invention will now be described solely by way of example and with reference to the accompanying drawings in which:
Figure 1 shows image display apparatus comprising a target projector in a dome, the dome being provided with references;
Figure 2 shows detailed components of the image display apparatus of Figure 1 and especially illustrates how the image display apparatus works with visual sensor means and a 50:50 beam splitter; and
Figure 3 illustrates the operation of the image display apparatus of Figures 1 and 2, and shows the image display apparatus projecting onto a dome surface of the dome.

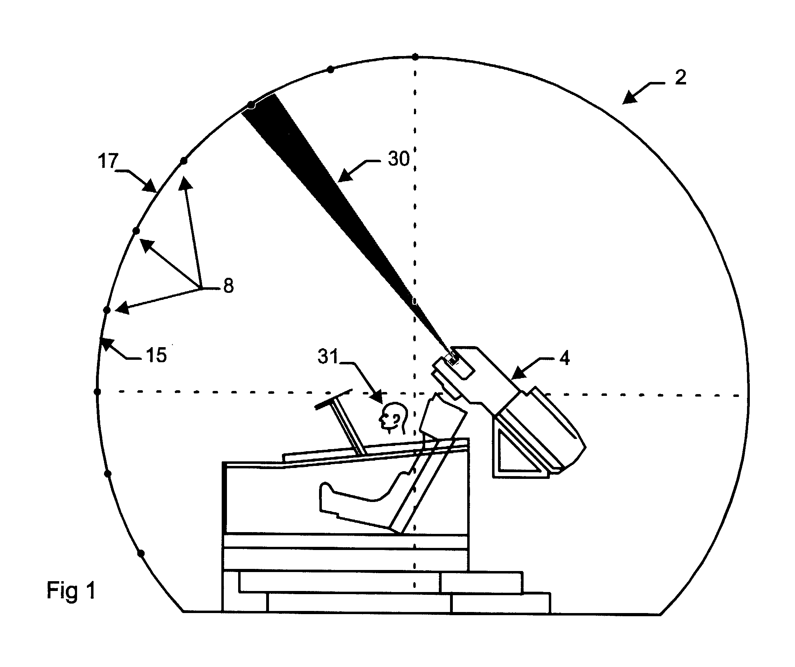

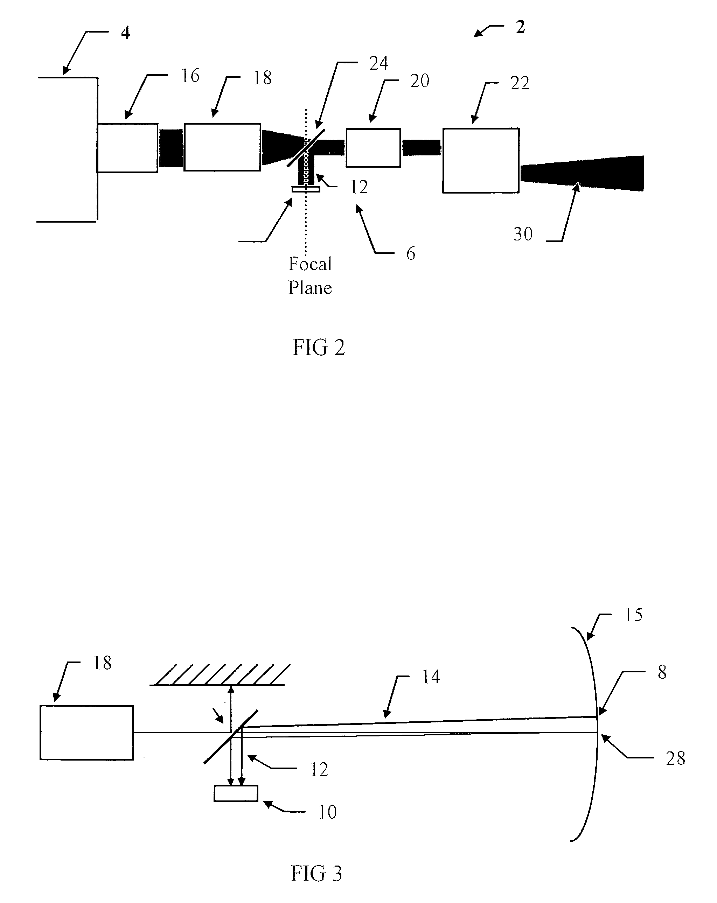

Referring to the drawings, there is shown image display apparatus 2 comprising a target projector 4 and self-calibration means 6. The self-calibration means 6 comprises reference means 8 (see Figures 1 and 3) for giving a known angular reference, and visual sensor means 10 (see Figures 2 and 3) which is positioned in an optical path 12 of the target projector 4 and which has an optical path 14 to the reference means 8. The reference means 8 is in the form of a bright reference spot formed by a chosen one of a plurality of light emitting diodes positioned on a surface 15 of a dome 17. The image display apparatus 2 is such that the target projector 4 is able to steer to a predetermined azimuth/elevation and is able to access the reference means 8 using a homing algorithm and the visual sensor means 10. Thus, in use of the image display apparatus 2, the achieved predetermined azimuth/elevation is able to be compared with the reference means 8 in order to determine any positional error and to calibrate the positional error. The image display apparatus 2 is thus able to effect self-calibration and it is not necessary for an operator to be present to effect the calibration.

The image display apparatus 2 is such that the target projector 4 is a liquid crystal display target projector 4 having an output lens 16, a zoom lens 18, a focus lens 20 and steering optics 22. A 50:50 beam splitter 24 is placed as shown between the zoom lens 18 and the focus lens 20. The visual sensor means 10 is able to see the reference means 8 in the form of the light emitting diode on the surface 15 of the dome 17. The target projector 4 is able to switch on the reference means 8, steer the optical path via the steering optics 22 to the nominal azimuth/elevation, and then automatically to home in on the reference means 8 using a homing algorithm, for example successive approximation or similar. The next point is able to be selected automatically and calibrated. In Figure 3, the target image 28 is shown separated from the reference means 8 and the separation distance represents the actual error that needs correcting by the self-calibration.

Figures 1 and 2 show a cone of image projection/vision 30 after the self-calibration.

The image display apparatus 2 has the major advantage that an operator 31 does not have to be present for positional calibration. In addition, the image display apparatus 2 has the further advantages of affording dynamic positional accuracy calibration/ testing, power on "home position" calibration/confidence testing, and motion smoothness testing.

It is to be appreciated that the embodiment of the invention described above with reference to the accompanying drawings has been given by way of example only and that modifications may be effected. Thus, for example, as shown most clearly in Figure 3, the image display apparatus 2 operates such that the visual sensor means 10 has the benefit of being able to see the reference means 8 and the target projector output at the same time. This means that the target projector 4 can display a spot known to be in the centre of the optical path and the homing algorithm can use both this spot and the reference means 8 to home in on. The use of the beam splitter 24 does however mean that only 50% of light from the target projector 4 ever leaves the target projector 4, since 50% is dumped. The visual sensor means 10 therefore only receives 25% of the image as the light for the visual sensor means 10 gets halved by the beam splitter 24. The reference means 8 also has its light output cut by half. The result may be unacceptable when a high output target projector 4 is required. The arrangement does however have the benefit of always being calibrated internally due to no moving parts. In a second embodiment of the invention not shown, a polarising beam splitter may be employed instead of the beam splitter 24, which beam splitter 24 will usually be a mirror. The polarising beam splitter is able to let all of the image from the target projector 4 through intact. All three colours will be polarised in one direction. However, the return image and the image from the reference means 8 is split, with half going to the visual sensor means 10 and half being dumped. This option still has the benefit of no moving parts.

In a third modification, the image display apparatus 2 may be such that the reference means 8 is inserted into the optical path 12 by motor means (not shown). This has the advantage that all of the light from the reference means 8 hits the visual sensor means 10. The image from the target projector 4 is totally blocked, and this means that the visual sensor means 10 has to be very accurately placed with a one-time calibration onto the centre. In a modification of this arrangement, two visual sensor means 10 may be employed back to back, with one visual sensor means 10 looking at the target projector 4, and the other visual sensor means 10 looking at the reference means 8.

In a fourth modification of the apparatus of the invention, the motor means may be used to insert a mirror instead of inserting the visual sensor means 10. The insertion of the mirror is easier than inserting the visual sensor means 10 because the mirror is mechanically more single with no hanging wires. A double mirrored mirror could be inserted for reflecting the full image from the target projector 4 onto one visual sensor means 10, with the other side of the double mirrored mirror reflecting the full image from the reference means 8 onto another visual sensor means 10. The two results can then be used to cancel out any error incurred by the placement of the mirror.

Different types of visual sensor means 10 may be employed. Visual sensor means 10 in the form of position sensing devices can provide high linearity and sensitivity. They interface well but they may provide restrictions on the amount of information obtainable. Charge coupled devices may give more information than position sensing devices. Thus, for example, a charge coupled device would give more information in the case of dynamically moving the field of view of the charge coupled device past the position sensing device laser giving the reference means 8. A series of images could be recorded of the reference means as it passes through the field of view of the visual sensor means. These images, stored as bitmaps, could be added together to give an accurate picture of the short/medium term motion smoothness. If the target projector 4 puts up a resolution test pattern and the charge coupled device camera could see that pattern, the resolution (and focus control) of the target projector 4 could be proved. This is possible since the charge coupled device (say 500 lines) would be looking at a smaller part of the charge coupled device image and could resolve liquid crystal display lines into more charge coupled device lines. This would probably require extra optics.

## Claims

1. Image display apparatus comprising a target projector and self-calibration means, the self-calibration means comprising reference means for giving a known angular reference, and visual sensor means which is positioned in an optical path of the target projector and which has an optical path to the reference means, and the image display apparatus being such that the target projector is able to steer to a predetermined azimuth/elevation and is also able to access the reference means using a homing algorithm and the visual sensor means, whereby the achieved predetermined azimuth/elevation is able to be compared with the reference means in order to determine any positional error and to calibrate for the positional error.

2. Image display apparatus according to claim 1 in which the target projector is so connected to the reference means that the target projector is able to switch on the reference means.

3. Image display apparatus according to claim 1 or claim 2 and including a 50:50 beam splitter for the visual sensor means, or a polarising beam splitter for the visual sensor means.

4. Image display apparatus according to claim 1 or claim 2 and including motor means for effecting the motorised insertion of the visual sensor means in the optical path of the target projector.

5. Image display apparatus according to claim 4 in which there is only one of the visual sensor means.

6. Image display apparatus according to claim 4 in which there are two of the visual sensor means, the two visual sensor means being arranged back to back with one visual sensor means being directed to the target projector and the other visual sensor means being directed to the reference means.

7. Image display apparatus according to claim 1 or claim 2 and including a mirror and motor means for effecting the motorised insertion of the mirror in the optical path of the target projector.

8. Image display apparatus according to claim 7 in which the mirror is a single mirrored mirror.

9. Image display apparatus according to claim 7 in which the mirror is a double mirrored mirror, the double mirrored mirror being such that one side reflects a full image from the target projector onto one visual sensor means, and such that the other side reflects a full reference image onto another visual sensor means.

10. Image display apparatus according to any one of the preceding claims in which the visual sensor means is a position sensing device, a charge coupled device or a quadrant detector.

11. Image display apparatus according to any one of the preceding claims in which the reference means is at least one light emitting diode, or a theodolite spot obtained from a theodolite.

12. Image display apparatus according to any one of the preceding claims in which the target projector is a liquid crystal display target projector.
